# EUROPEAN PATENT APPLICATION

(11) **EP 2 375 063 A1**
(43) Date of publication of application: **12.10.2011**
(21) Application number: 10729203.9
(22) Date of filing: 05.01.2010
(51) Int. Cl.: F03D 7/04

(54) **WIND-POWER GENERATION DEVICE AND CONTROL METHOD FOR WIND-POWER GENERATION DEVICE**

(30) Priority: 06.01.2009 JP 2009000992
(71) Applicant: Mitsubishi Heavy Industries, Ltd., Tokyo 108-8215 (JP)
(72) Inventor: WAKASA, Tsuyoshi, Nagasaki-shi Nagasaki 851-0392 (JP)
(74) Representative: Intès, Didier Gérard André
(86) International application number: PCT/JP2010/050038
(87) International publication number: WO 2010/079783

(57) **Abstract**

When a rotor is suddenly accelerated, a wind turbine generator is stopped without exerting a mechanical impact on both a tower and wind turbine blades. When the rotational speed of a wind turbine rotor (11) is suddenly accelerated, a control unit (21) controls the driving speed of the blades so as to change from high speed to low speed, stepwise or continuously, when a pitch-angle control unit (20) drives the pitch angle of the blades to a feathering side.

## Description

### {Technical Field}

The present invention relates to a wind turbine generator.

### {Background Art}

Wind turbine generators generally have a configuration in which heavy objects, such as a nacelle containing a gearbox and a generator and a wind turbine rotor to which wind turbine blades are mounted, are installed on the top of a cylindrical tower having a height of several tens of meters. In such wind turbine generators, if a utility grid fault occurs, the voltage of the utility grid drops, decreasing the electrical load on the generator, so that rotation of the rotor of the generator (hereinafter referred to as a generator rotor) is suddenly accelerated. Thus, relative incoming wind speed of the wind turbine rotor is increased because the rotation of the generator rotor is added to the rotation of the wind turbine blades by the wind, which exerts an excessive mechanical impact (hereinafter referred to as a "load") on the wind turbine generators.

Thus, in a wind turbine generator equipped with a pitch control mechanism for the wind turbine blades, when the load on the wind turbine generator suddenly increases, the torque of the generator rotor is reduced by switching a pitch angle of the wind turbine blades to a feathering side to relieve the wind to suppress the acceleration of the wind turbine rotor, thereby finally stopping the wind turbine generator.

At this time, if the rotation of the blades is reduced by rapidly switching the pitch angle to the feathering side, with the feathering speed, that is, the pitch angle switching speed, at the maximum, the thrust force is sharply decreased, which imposes a sudden forward-tilting load on the nacelle and an excessive load also on the tower. Furthermore, to design and manufacture a tower having sufficient strength against the load is undesirable from the viewpoint of cost. On the other hand, if the pitch angle is slowly switched to the feathering side at a low feathering speed, the load on the tower ins relatively decreased; however, not only is the load on the wind turbine blades increased, but also it takes much time to reduce the rotational speed of the wind turbine blades to, a desired speed.
Patent Literature 1 discloses a technology for reducing the speed of the generator rotor using a mechanical brake.

### {Citation List}

### {Patent Literature}

{PTL 1} US Patent Application, Publication No. 2007/0189900

### {Summary of Invention}

### {Technical Problem}

However, the technology disclosed in Patent Literature 1 does not adopt pitch angle control; for example, stopping the rotation of the wind turbine rotor by suddenly driving the mechanical brake when the rotation is suddenly accelerated will cause an excessive load to be generated on an air volume generator due to an inertial force.

The present invention is made to solve the above problems, and it is an object thereof to provide a wind turbine generator that can be stopped without exerting a mechanical impact on both the tower and the wind turbine blades when the wind turbine rotor is suddenly accelerated.

### {Solution to Problem}

The present invention adopts the following solutions to solve the problems described above.
A first aspect of the present invention is a wind turbine generator comprising a wind turbine rotor including blades having a variable pitch angle; a control unit for controlling driving speed and drive timing of the blades; and a pitch-angle control unit for controlling a pitch angle by driving the blades on the basis of the control unit; wherein when rotational speed of the wind turbine rotor becomes a predetermined permissible rotational speed or higher, the control unit controls the driving speed of the blades so as to change from high speed to low speed, stepwise or continuously.

In the wind turbine generator of the first aspect of the present invention, the driving speed of the blades changes stepwise or continuously. When the pitch angle of the blades is driven to the feathering side at high speed, a mechanical impact is exerted on the tower and so on. On the other hand, when the pitch angle of the blades is driven to the feathering side at low speed, it takes much time until the wind turbine rotor is reduced in speed and stopped, during which a mechanical impact due to an aerodynamic force or centrifugal force is exerted on the wind turbine blades. Accordingly, by changing the driving force of the wind turbine blades stepwise or continuously, a mechanical impact on the tower and so on can be reduced, and by reducing the time until the wind turbine rotor is stopped, the load on the blades can be reduced, as in the present invention. Thus, the wind turbine rotor can be stopped while reducing excessive loads on the structures of the wind turbine generator, such as the tower and the blades. Here, the high speed is preferably set to, for example, about 7°/s or higher and 7.5°/s or lower, and the low speed is preferably set to, for example, about 1°/s or higher and 4°/s or lower.

A wind turbine generator according to the first aspect described above may further include a braking unit for stopping rotation of the wind turbine rotor and may be configured such that, when the rotational speed of the wind turbine rotor becomes a predetermined permissible rotational speed or higher, the driving speed of the blades is changed by the control unit from high speed to low speed, stepwise or continuously, and thereafter, the rotation of the wind turbine rotor is stopped by the braking unit.

With this configuration, in the case where the rotation of the wind turbine rotor is suddenly accelerated, exceeding a predetermined permissible rotational speed, by switching the driving speed of the wind turbine blades stepwise or continuously when controlling the pitch the rotational speed of the wind turbine rotor is reduced, Thereafter, the rotation of the wind turbine rotor is stopped using the brake. Accordingly, since the wind turbine blades are not driven rapidly, no mechanical impact is exerted on the structures of the wind turbine generator. Furthermore, since the brake is used together with pitch angle control, the rotation of the rotor can be sufficiently stopped even if the pitch angle is controlled by driving the blades at low speed.

A wind turbine generator according to the first aspect described above may be configured such that, when the rotational speed of the wind turbine rotor becomes a predetermined permissible rotational speed or higher, the driving speed of the blades is changed by the control unit from high speed to low speed, stepwise or continuously, and thereafter, the rotation of the wind turbine rotor is stopped by applying reverse braking to a generator that rotates together with the wind turbine rotor and that is driven by the rotation of the wind turbine rotor.

With this configuration, in the case where the rotation of the wind turbine rotor is suddenly accelerated, exceeding a predetermined permissible rotational speed, by switching the driving speed of the wind turbine blades stepwise or continuously when controlling the pitch angle, the rotational speed of the wind turbine rotor is reduced. Furthermore, during the process, by applying reverse braking to a generator that rotates together with the wind turbine rotor and that is driven by the rotation of the wind turbine rotor to generate a reverse torque in the wind turbine rotor, the rotation thereof is stopped. Accordingly, since the blades are not driven rapidly, no mechanical impact is exerted on the structures of the wind turbine generator. Furthermore, since the generator is subjected to reverse braking together with pitch angle control, the rotation of the rotor can be sufficiently stopped even if the pitch angle is controlled by driving the blades at low speed.

A wind turbine generator according to the first aspect described above may be configured such that, when the rotational speed of the wind turbine rotor becomes a predetermined permissible rotational speed or higher, the driving speed of the blades is changed from high speed to low speed, stepwise or continuously, by the control unit, and thereafter, the rotation of the wind turbine rotor is stopped by applying regenerative braking to a generator that rotates together with the wind turbine rotor and that is driven by the rotation of the wind turbine rotor.

With this configuration, in the case where the rotation of the wind turbine rotor is suddenly accelerated, exceeding a predetermined permissible rotational speed, by switching the driving speed of the wind turbine blades stepwise or continuously when controlling the pitch angle, the rotational speed of the wind turbine rotor is reduced. Furthermore, during the process, by applying regenerative braking to the generator to convert the rotational energy of the wind turbine rotor to electrical energy and consuming it, the rotation is stopped. Accordingly, since the blades are not driven rapidly, no mechanical impact is exerted on the structures of the wind turbine generator. Furthermore, since regenerative braking is used to brake the generator together with pitch angle control, the rotation of the rotor can be sufficiently stopped even if the pitch angle is controlled by driving the blades at low speed.

A second aspect of the present invention is a method for controlling a wind turbine generator comprising a wind turbine rotor including blades having a variable pitch angle; a control unit for controlling driving speed and driving timing of the blades; and pitch-angle control unit for controlling the pitch angle by driving the blades on the basis of the control unit, the method comprising: a step of detecting whether the rotational speed of the wind turbine rotor has become a predetermined permissible rotational speed or higher; and a step of controlling the driving speed of the blades by the control unit so as to change from high speed to low speed, stepwise or continuously, in response to the detection result.

A method for controlling the wind turbine generator according to the second aspect described above may be configured such that a braking unit for stopping the rotation of the wind turbine rotor is further provided and may include the step of detecting whether the rotational speed of the wind turbine rotor has became a predetermined permissible rotational speed or higher; the step of changing the driving speed of the blades from high speed to low speed, stepwise or continuously, by the control unit in response to the detection result; and a step of stopping the rotation of the wind turbine rotor by the braking unit.

A method for controlling the wind turbine generator according to the second aspect described above may include the step of detecting whether the rotational speed of the wind turbine rotor has become a predetermined permissible rotational speed or higher; the step of changing the driving speed of the blades from high speed to low speed, stepwise or continuously, by the control unit in response to the detection result; and a step of stopping the rotation of the wind turbine rotor by applying reverse braking to a generator that rotates together with the wind turbine rotor and that is driven by the rotation of the wind turbine rotor.

A method for controlling the wind turbine generator according to the second aspect described above may include the step of detecting whether the rotational speed of the wind turbine rotor has become a predetermined permissible rotational speed or higher; the step of changing the driving speed of the blades from high speed to low speed, stepwise or continuously, by the control unit in response to the detection result; and a step of stopping the rotation of the wind turbine rotor by applying regenerative braking to a generator that rotates together with the wind turbine rotor and that is driven by the rotation of the rotor.

### {Advantageous Effects of Invention}

In the case where the rotation of the wind turbine rotor is suddenly accelerated, exceeding a predetermined permissible rotational speed, since rapid pitch angle control is not performed when the pitch angle is controlled, the wind turbine rotor can be stopped without exerting a mechanical impact on the other structures of the wind turbine generator, including the tower.

### {Brief Description of Drawings}

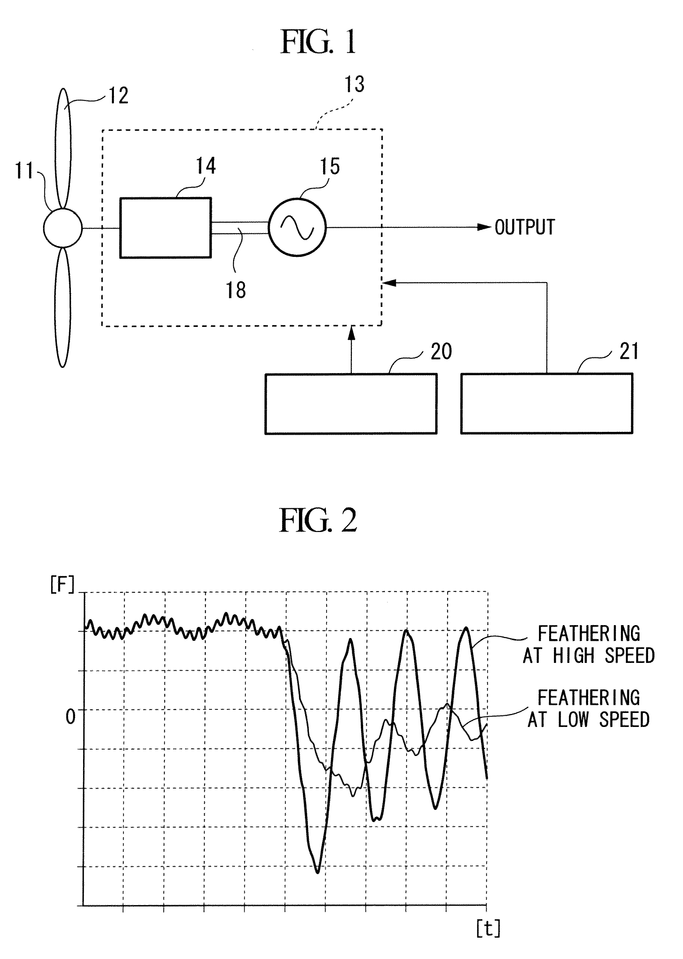

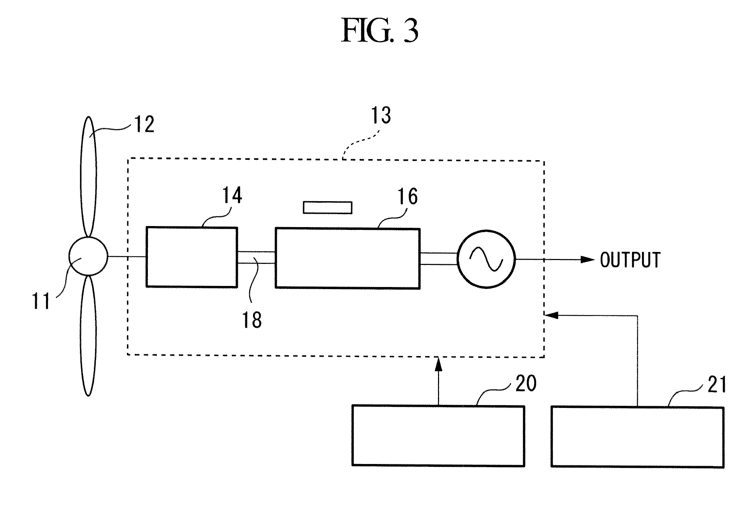

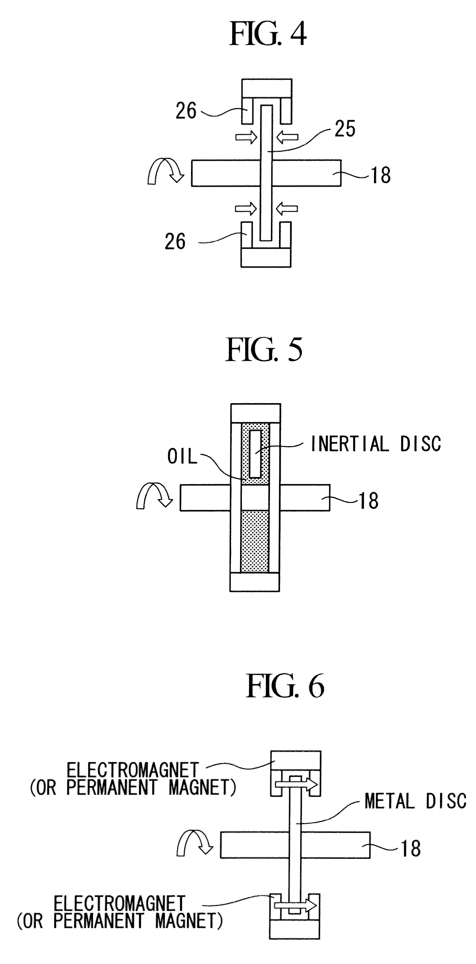

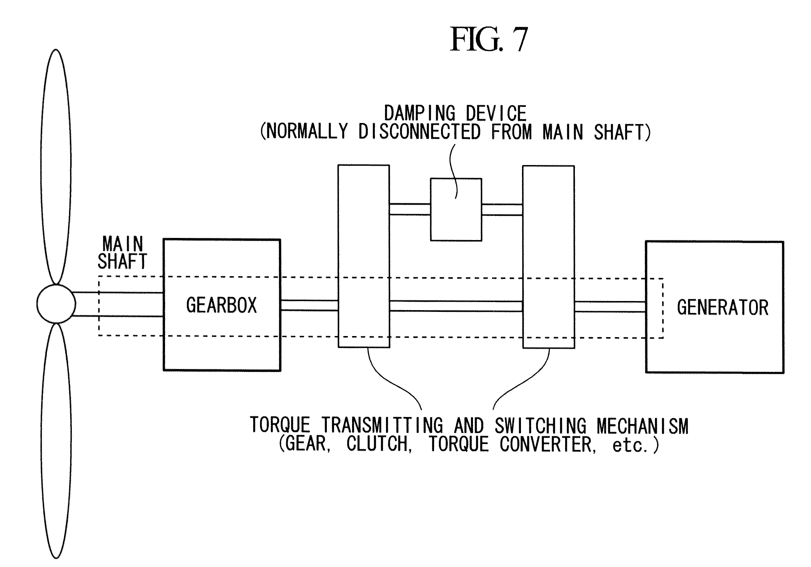

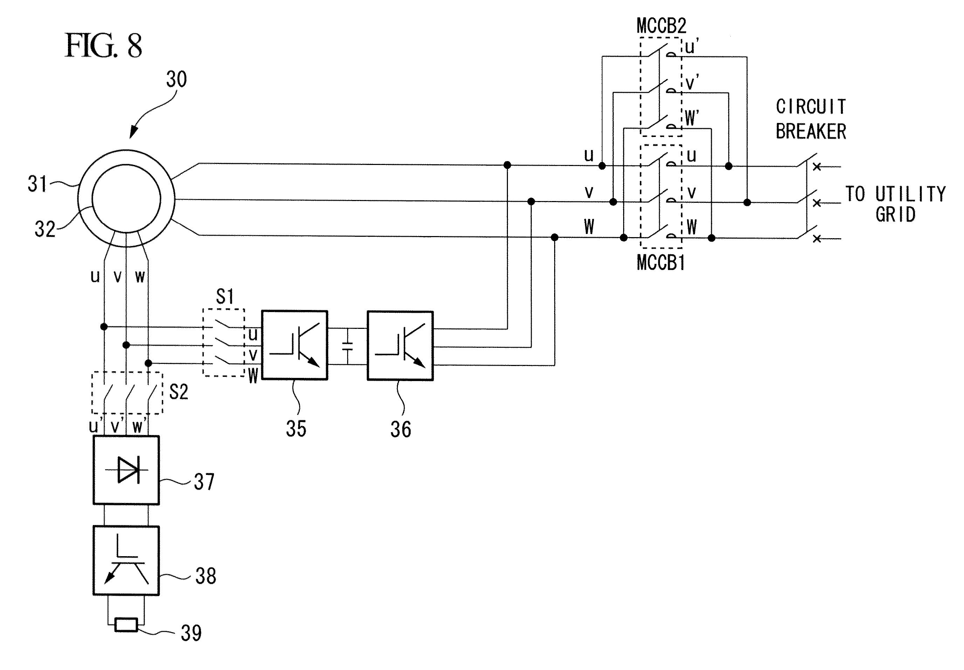

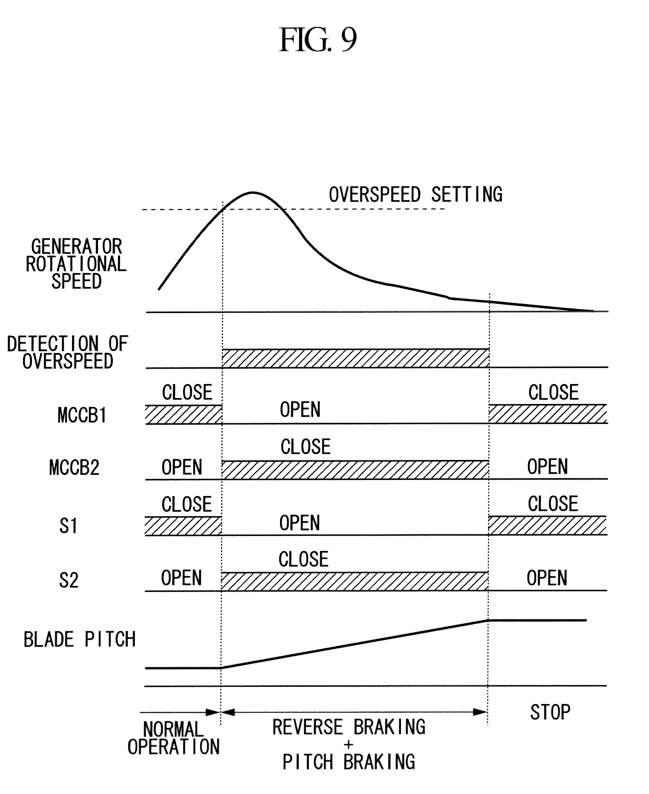

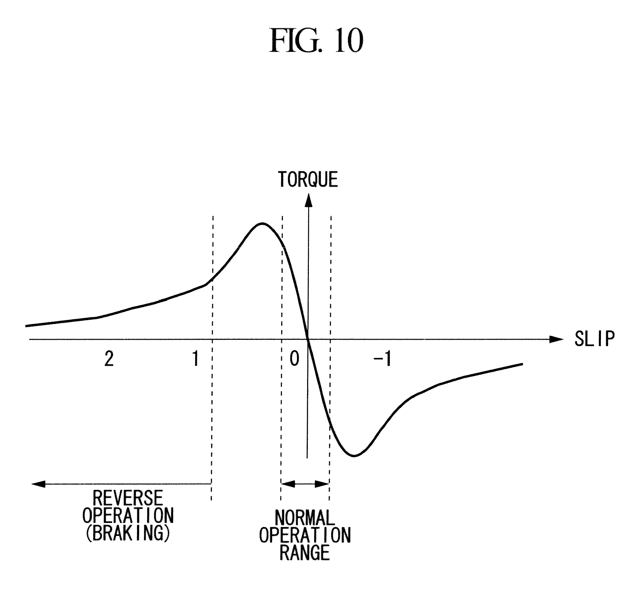

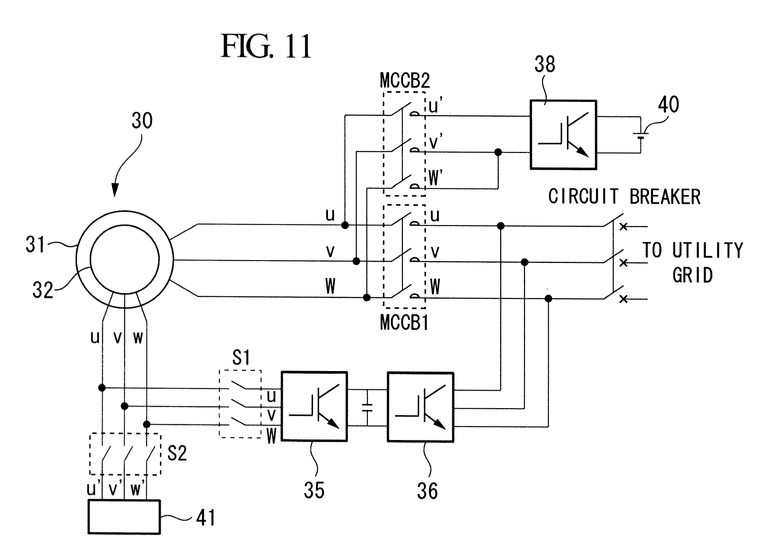

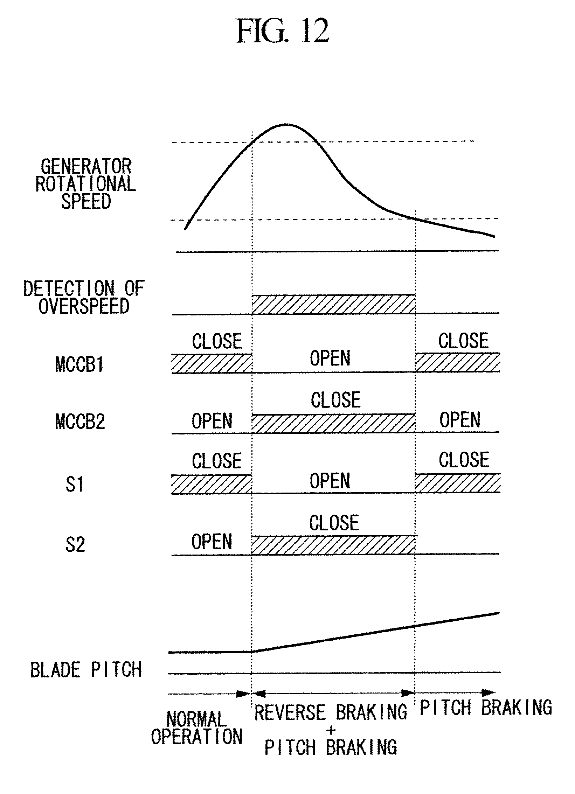

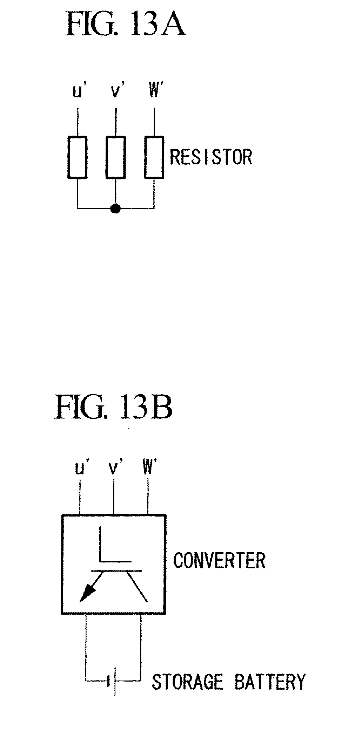

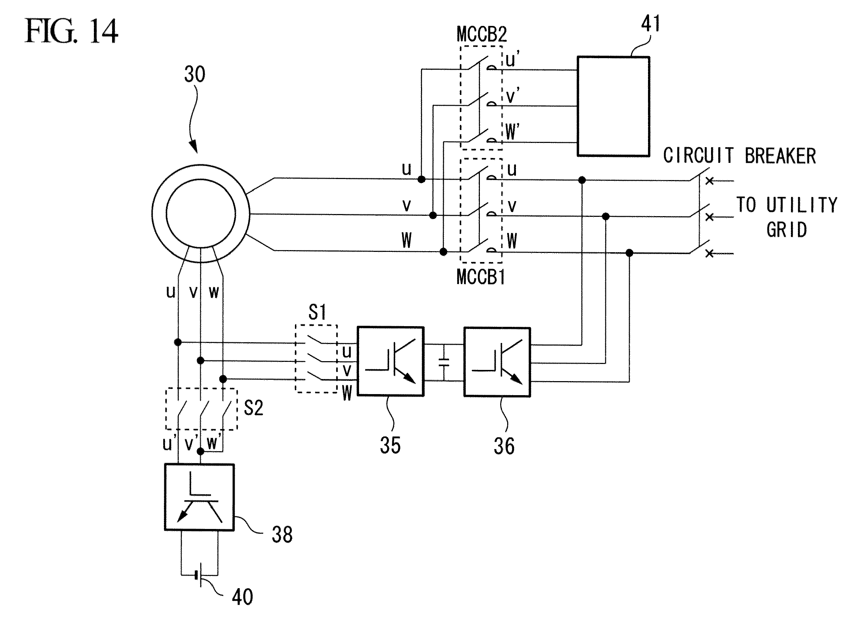

{Fig. 1} Fig. 1 is a block diagram illustrating, in outline, the configuration of a wind turbine generator according to a first embodiment of the present invention.
{Fig. 2} Fig. 2 is a diagram in which loads imposed on the tower of the wind turbine generator when the blades are driven rapidly (at high speed) to a predetermined pitch angle and when the wind turbine blades are slowly driven (at low speed) to a predetermined pitch angle are measured and compared.
{Fig. 3} Fig. 3 a block diagram illustrating, in outline, the configuration of a wind turbine generator according to a second embodiment of the present invention.
{Fig. 4} Fig. 4 is a diagram illustrating, in outline, a brake according to the wind turbine generator of the second embodiment of the present invention,
{Fig. 5} Fig. 5 is a diagram illustrating, in outline, another example of the brake according to the wind turbine generator of the second embodiment of the present invention.
{Fig. 6} Fig. 6 is a diagram illustrating, in outline, yet another example of the brake according to the wind turbine generator of the second embodiment of the present invention.
{Fig. 7} Fig. 7 is a diagram illustrating an example in which a torque transmission mechanism is provided in the wind turbine generator of the second embodiment of the present invention.
{Fig. 8} Fig. 8 is a circuit diagram illustrating, in outline, the configuration of a generator according to a wind turbine generator of a third embodiment of the present invention.
{Fig. 9} Fig. 9 is a timing chart illustrating a sequence for stopping a wind turbine rotor in the wind turbine generator of the third embodiment of the present invention.
{Fig. 10} Fig. 10 is a diagram illustrating the relationship between the torque of an induction generator and slip frequencies.
{Fig. 11} Fig. 11 is a circuit diagram illustrating, in outline, the configuration of a generator according to a wind turbine generator of a fourth embodiment of the present invention,
{Fig. 12} Fig. 12 is a timing chart illustrating a sequence for stopping a wind turbine rotor in the wind turbine generator of the fourth embodiment of the present invention.
{Fig. 13A} Fig. 13A is a diagram illustrating a load, for example, resistor, of the wind turbine generator of the fourth embodiment of the present invention.
{Fig. 13B} Fg. 13B is a diagram illustrating a load, for example, a storage battery, of the wind turbine generator of the fourth embodiment of the present invention.
{Fig. 14} Fig. 14 is a circuit diagram illustrating, in outline, the configuration of a modification of the generator according to the wind turbine generator of the fourth embodiment of the present invention.

### {Description of Embodiments}

Embodiments of the wind turbine generator of the present invention will be described in detail below with reference to the drawings.

### {First Embodiment}

Fig. 1 is a block diagram illustrating, in outline, the configuration of a wind turbine generator according to this embodiment. A wind turbine generator 1 is equipped with a mechanical portion that includes, as main components, a wind turbine rotor 11, wind turbine bladed 12, and a nacelle 13 which are provided on the top of a tower (not shown) and a pitch-angle control unit 20 that performs pitch angle switching control of the wind turbine blades. The nacelle 13 is equipped with a gearbox 14 and a generator 15.

The plurality of wind turbine blades 12 are mounted on the wind turbine rotor 11 in a radiating pattern. The wind turbine rotor 11, the gearbox 14, and the generator 15 are mechanical joined together with a main shaft 18, a gearbox (not shown), etc., and can rotate together. Accordingly, the wind turbine blades 12 rotate together with the wind turbine rotor 11 when receiving wind power energy, the rotation is increased in speed by the gearbox 14, and thereafter the generator 15 is driven to generate electricity, thereby converting the wind power energy to electrical energy.

The pitch-angle control unit 20 calculates the pitch angle of the wind turbine blades 12 for achieving a predetermined output of the wind turbine generator on the basis of the rotational speed of the turbine rotor 11 and the output of the wind turbine generator and outputs an electric-power-generation pitch angle signal. Furthermore, for example, when the rotation of the wind turbine rotor 11 is suddenly accelerated due to a utility grid fault etc., the pitch-angle control unit 20 calculates the pitch angle of the wind turbine bladed 12 suitable for relieving the wind blowing against the wind turbine blades 12 to reduce the rotational speed of the wind turbine rotor and outputs it as a shutdown pitch angle signal.

A control unit 21 determines the feathering speed, that is, a blade driving speed for the pitch angle determined by the pitch-angle control, unit 20, and outputs it together with the feathering timing, that is, the timing at which the blades are driven, as a feathering signal.

Here, Fig. 2 is a diagram in which loads imposed on the tower of the wind turbine generator when the blades are driven rapidly (at high speed) to a predetermined pitch angle and when the wind turbine blades are slowly driven (at low speed) to a predetermined pitch angle are measured and compared. The comparison shows that, directly after feathering, there is no large difference between the loads imposed on the tower; however, after a set period of time, the load imposed on the tower with the rapid feathering increases. Thus, the present invention sets a blade driving speed, that is, a feathering speed, and feathering timing in view of this point.

Accordingly, the feathering speed and the feathering timing are set so that the pitch angle is switched at stepwise varying speeds; for example, when the rotational speed of the wind turbine rotor is suddenly accelerated, driving of the blades is immediately started to switch the pitch angle to the feathering side at the highest speed, and after a set period of time, the blades are driven at low speed to be finally switched to a target pitch angle. The highest speed is preferably set to, for example, about 7 to 7.5°/s, and the low speed is preferably set to, for example, about 1 to 4°/s.

Furthermore, there are two or more feathering speeds and feathering timings, which are preferably calculated in advance and stored in a memory or the like. The feathering speeds and the feathering timings are calculated, using them as parameters and using the achievable highest rotational speed of the rotor of the generator, the load on the wind turbine blades, the load on the tower, etc. as evaluation criteria, by fending a combination of parameters with which well-balanced minimization of the evaluation criteria can be achieved. This parameter optimization can be achieved by an optimization method, such as an experimental design method or the Taguchi method.

Furthermore, instead of the stepwise changing of the timing at which the feathering speed is switched, for example, the feathering speed may be continuously changed, defining it as a function of time. In this case, parameters for determining the function are also calculated using the achievable highest rotational speed of the rotor of the generator, the load on the wind turbine blades, the load on the tower, etc. as evaluation criteria, by finding a combination of parameters with which well-balanced minimization of the evaluation criteria can be achieved. This parameter optimization can be achieved by an optimization method, such as an experimental design method or the Taguchi method.

Next, the operation of the thus-configured wind turbine generator will be described.
As described above, the wind turbine blades 12, during turbine generation, rotate together with the wind turbine rotor 11 by receiving wind, that is, wind power energy, while maintaining a predetermined angle on the basis of a generating pitch angle signal. This rotation is transmitted to the gearbox 14 through the main shaft 18 etc. The gearbox 14 further increases the speed of the transmitted rotation and transmits it to the generator 15 to drive the generator 15, thereby generating electrical power. The generated electrical power is supplied to a utility grid (not shown).

In the case where the rotation of the wind turbine rotor 11 is suddenly accelerated because a gust of wind blows against the wind turbine blades 12, or in the case where the rotation of the generator, and thus, the rotation of the wind turbine rotor 11, is suddenly accelerated to a predetermined permissible rotational speed or higher because the electrical load on the wind turbine generator is rapidly decreased due to, for example, a fault in the utility grid, it is necessary to reduce or stop the rotation of the wind turbine blades 12. Thus, first, the pitch control unit 20 calculates a pitch angle for relieving the wind blowing against the wind turbine blades 12 and outputs it as a shutdown pitch angle signal. Next, the control unit 21 determines a feathering speed and feathering timing outputs a feathering signal. The wind turbine bladed 12 are driven at the timing based on the feathering signal to assume the pitch angle based on the shutdown pitch angle signal. That is, the wind turbine blades 12 are driven to the feathering side at a high speed of about 7°/s or higher and 7.5°/s or lower on the basis of the feathering signal for a predetermined time. Subsequently, the wind turbine bladed 12 are driven at a low speed (about 1°/s or higher and 4°/s or lower) so that no excessive load is imposed on the structures of the wind turbine generator, such as the tower, and are finally switched to the pitch angle at which the wind is relieved on the basis of the shutdown pitch angle signal.

Since the rotational speed of the wind turbine rotor is reduced stepwise by switching the feathering speed stepwise in this way, an excessive load on the structures of the wind turbine generator, such as the tower, can be reduced, and thus no mechanical impact is exerted by feathering.

### {Second Embodiment}

Fig. 3 a block diagram illustrating, in outline, the configuration of a wind turbine generator according to this embodiment. The difference between the wind turbine generator of this embodiment and that of the first embodiment is that a brake 16 is provided and the rotation of the rotor of the generator 15 is reduced using the brake 16 together with feathering. Descriptions of commonalities between the wind turbine generator of this embodiment and that of the first embodiment will be omitted here, and the differences will be mainly described.

As shown in Fig. 4, the brake 16 includes a brake disc 25 and a caliper 26. The brake disc 25 is mechanically joined to the wind turbine rotor 11 so as to rotate therewith. The caliper 26 has a brake pad (not shown) on a surface facing the brake disc 25 and brakes the rotation of the brake disc 25 by clamping the brake disc 25 via the brake pad. Accordingly, by braking the rotation of the brake disc 25, the rotation of the rotation of the wind turbine rotor 11 is also stopped.

The control unit 21 outputs a feathering speed and feathering timing as a feathering signal. The feathering speed of this embodiment is preferably set to a low speed (for example, 1°/s or higher and 4°/s or lower) so that an excessive load is not imposed on the structures of the wind turbine generator, such as the tower, and the feathering speed and the feathering timing are preferably calculated in advance and stored in a memory or the like. As described above, the feathering speed and the feathering timing can also be changed stepwise; for example, the wind turbine blades 12 are immediately driven at the highest speed to switch the pitch angle to the feathering side, and after a set period of time, the pitch angle is finally switched to a target pitch angle at low speed, and the feathering speed and the feathering timing are calculated by a predetermined simulation or the like.

Next, the operation of the thus-configured wind turbine generator will be described.
As described above, the wind turbine blades 12, during turbine generation, rotate together with the wind turbine rotor 11 by receiving wind, that is, wind power energy, while maintaining a predetermined angle on the basis of a generating pitch angle signal. This rotation is transmitted to the gearbox 14 through the main shaft 18 etc. The gearbox 14 further increases the speed of the transmitted rotation and transmits it to the generator 15 to drive the generator 15, thereby generating electrical power. The generated electrical power is supplied to a utility grid (not shown).

In the case where the rotation of the wind turbine rotor 11 is suddenly accelerated because a gust of wind blows against the wind turbine blades 12, or in the case where the rotation of the generator, and thus, the rotation of the wind turbine rotor 11, is suddenly accelerated to a predetermined permissible rotational speed or higher because the electrical load on the wind turbine generator is rapidly decreased due to, for example, a fault in the utility grid, it is necessary to reduce or stop the rotation of the wind turbine blades 12. Thus, first, the pitch control unit 20 calculates a pitch angle for relieving the wind blowing against the wind turbine blades 12 and outputs it as a shutdown pitch angle signal. Next, the control unit 21 determines a feathering speed and feathering timing and outputs a feathering signal. The wind turbine blades 12 are driven at the timing based on the feathering signal to assume the pitch angle based on the shutdown pitch angle signal. That is, the wind turbine blades 12 are driven to a pitch angle for relieving the wind on the basis of the shutdown pitch angle signal at low speed so that no excessive load is imposed on the structures of the wind turbine generator, such as the tower, and maintains the pitch angle determined by the shutdown pitch angle signal for a period of time determined on the basis of the feathering signal.

Subsequent, the brake 16 is driven. That is, the caliper 26 clamps the brake disc 25 rotating together with the wind turbine rotor 11, and the rotation of the brake disc 25 is reduced due to the frictional force between the caliper 26 and the brake disc 25 and is finally stopped. Stopping the brake disc 25 causes the wind turbine rotor 11 to stop.

The brake 16 can be driven at any timing, for example, when the rotational speed of the blades falls below a predetermined value or after a predetermined period of time from the start of control for driving the blades to the feathering side.

Thus, with the wind turbine generator of the present invention, since rapid driving of pitch angle switching is not performed when the rotation of the wind turbine rotor is suddenly accelerated, no mechanical impact is exerted on the structures of the wind turbine generator, such as the tower. Furthermore, since the brake is used together with feathering, the rotation of the rotor can be stopped sufficiently even by performing pitch angle switching at low speed.

Although this embodiment uses the brake 16 composed of the brake disc 25 and the caliper 26, any device that dissipates the energy of the wind turbine rotor may be used; for example, a configuration using an oil damper as shown in Fig. 5, or a configuration using an electromagnetic brake that adopts a permanent magnet or an electromagnet, as shown in Fig. 6, may be used. They may be used singly or in combination. In particular, the use of the electromagnetic brake also allows rotational energy to be extracted as electrical energy and to be stored in an energy storage device, such as a battery, a capacitor, or an SMES. The use of the oil damper or the electromagnetic brake that adopts a permanent magnet causes mechanical loss in the shaft system if connected to the main shah all the time. Therefore, the mechanical loss may be avoided by adding a mechanism that is connected to the main shaft system at a constant rotational speed or higher, for example, an attenuated-torque transmission mechanism, such as a clutch, a torque converter, or a continuously variable transmission (CVT), as shown in Fig. 7.

### {Third Embodiment}

The difference between a wind turbine generator of this embodiment and that of the first embodiment is that the rotational speed of a rotor 32 of a generator 30 is reduced by applying reverse braking to the generator, together with feathering, to stop a wind turbine rotor. Descriptions of commonalities between the wind turbine generator of this embodiment and that of the first embodiment will be omitted here, and only the differences will be mainly described.

Fig. 8 is a circuit diagram illustrating the configuration of the generator 30 according to the wind turbine generator of the present invention. This embodiment uses a three-phase winding induction generator 30. Stator winding terminals u, v, and w connected to a stator 31 of the winding induction generator 30 are connected to a utility grid through an MCCB 1 or an MCCB 2, which are circuit breakers. When the connection is switched from the MCCB 1 to the MCCB 2, the connections of the rotor winding terminals u and v are transposed. The stator winding terminals u, v, and w connected to the rotor 32 can be connected to a rotor-side power transducer 35 and a stator-side power transducer 36 via a switch S1 and are also connected to a rectifier 37, a chopper circuit 38, and a resistor 39 via a switch S2.

Fig. 9 is a timing chart illustrating a sequence for stopping the wind turbine rotor when the rotational speed of the wind turbine blades of the thus-configured wind turbine generator is suddenly accelerated due to a utility grid fault or the like. In a normal operation, that is, in a power generating state, the MCCB 1 and the switch 1 are closed, and the MCCB 2 and the switch S2 are opened. That is, the rotor winding terminals u, v, and w are connected to the utility grid via the rotor-side power transducer 35, the stator-side power transducer 36, and the MCCB 1 via the switch S1, and the stator winding terminals u, v, and w are connected to the utility grid via the MCCB 1.

When the rotational speed of the rotor 32 is suddenly accelerated due to a utility grid fault or the like, the sharp acceleration of the rotation of the rotor 32 is detected, and thus, the MCCB 1 and the switch S1 are opened, and the MCCB 2 and the switch 52 are closed. By switching from the MCCB 1 to the MCCB 2, the connections of the stator winding terminals u and v are transposed. That is, u' switches to v, and v' switches to u. Here, as shown in Fig. 10, when the connections of any two terminals of the three terminals of the running induction generator are changed, the generator is braked because it with a slip exceeding 1, thus allowing for efficient hard braking, Accordingly, by switching from the MCCB 1 to the MCCB 2, the slip of the generator 30 becomes larger than 1, and the rotating direction of the rotating magnetic field is reversed, which reverses the direction of the torque of the rotor 32, thus providing a rotor 32 braking effect.

Furthermore, by opening the switch S1 at the same time, the rotor-side power transducer 35 and the stator-side power transducer 36 are disconnected from the rotor windings u, v, and w for protection. By opening the switch S1 and connecting the switch S2, the rectifier 37, the chopper circuit 38, and the resistor 39 are connected, so that the torque of the rotor 32 can be controlled using the chopper circuit 38. The switch S1 can be omitted by using a gate block function for the rotor-side power transducer 35 and the stator-side power transducer 36.

Upon braking the rotor 32, the pitch control unit 20 calculates a pitch angle for relieving the wind blowing against the wind turbine blades 12 and outputs it as a shutdown pitch angle signal. Next, the control unit 21 determines a feathering speed and feathering timing and outputs a feathering signal. The wind turbine bladed 12 are driven at the timing based on the feathering signal to assume the pitch angle based on the shutdown pitch angle signal. That is, the wind turbine blades 12 are driven to a pitch angle for relieving the wind on the basis of a shutdown pitch individual signal at low speed so that no excessive load is imposed on the structures of the wind turbine generator, such as the tower, and maintains the pitch angle determined by the shutdown pitch angle signal for a period of time determined on the basis of the feathering signal.

Thus, with the wind turbine generator of the present invention, since high-speed feathering of the wind turbine blades, that is, rapid driving of pitch angle switching, is not performed when the rotation of the wind turbine rotor is suddenly accelerated, no mechanical impact is exerted on the structures of the wind turbine generator, such as the tower. Furthermore, since the rotational speed of the rotor of the generator is reduced by applying reverse braking to the generator together with feathering, the rotation of the wind turbine rotor can be sufficiently stopped even if the wind turbine blades are driven at low speed. Furthermore, since the rotation of the wind turbine rotor can be reduced or stopped without adding another mechanism, such as a brake or a damping mechanism, it is desirable also from the viewpoint of manufacturing costs and maintenance.

### {Fourth Embodiment}

Fig. 11 is a circuit diagram illustrating the configuration of a generator according to the wind turbine generator of the present invention. The difference between the wind turbine generator of this embodiment and that of the first embodiment is that the rotational speed of a rotor 32 of a generator 30 is reduced by applying regenerative braking to the generator together with feathering to stop the wind turbine rotor. Descriptions of commonalities between the wind turbine generator of this embodiment and that of the first embodiment will be omitted here, and only differences will be described.

Fig. 11 is a circuit diagram illustrating the configuration of the generator 30 according to the wind turbine generator of the present invention. This embodiment uses a three-phase winding induction generator 30. Stator winding terminals u, v, and w connected to a stator 31 of the winding induction generator 30 are connected to a utility grid or a stator-side power transducer 36 through an MCCB 1, which is a circuit breaker. The stator winding terminals u, v, and w are also connected to a chopper and a DC power supply 40 via an MCCB 2. In this case, a total of two terminals, that is, the independent u-phase terminal and the connected v- and w-phase terminals, are input to the chopper circuit 38. Rotor winding terminals u, v, and w connected to a rotor 32 can be connected to a rotor-side power transducer 35 via a switch S1 and are connected to a load 41 via a switch S2.

Fig. 12 is a timing chart illustrating a sequence for stopping the wind turbine rotor when the rotational speed of the wind turbine blades of the thus-configured wind turbine generator is suddenly accelerated due to a utility grid fault or the like. In normal operation, that is, in a power generating state, the MCCB 1 and the switch 1 are closed, and the MCCB 2 and the switch S2 are opened. That is, the rotor winding terminals u, v, and w are connected to the utility grid via the rotor-side power transducer 35 and the stator-side power transducer 36 via the switch 51, and the stator winding terminals u, v, and w are connected to the utility grid via the MCCB 1.

When the rotational speed of the rotor 32 is suddenly accelerated due to a utility grid fault or the like, the sharp acceleration of the rotation of the rotor 32 is detected, and thus, the MCCB 1 and the switch S1 are opened, and the MCCB 2 and the switch S2 are closed. When the connection is switched from the MCCB 1 to the MCCB 2, a DC current is supplied from a DC power supply to energize the u-phase terminal and a terminal formed by connecting the two v-phase and w-phase terminals. Thus, the generator 30 functions as a synchronous generator that uses the stator as a field magnet and the rotor as an armature and consumes the rotational energy of the rotor as electrical energy, thereby being braked. The strength of the magnetic field can be controlled by the chopper circuit. Furthermore, by opening the switch S1 at the same time, the rotor-side power transducer 35 and the stator-side power transducer 36 are disconnected from the rotor windings u, v, and w for protection. By opening the switch S1 and connecting the switch S2, the rotor winding terminals u, v, and w and the load 41 can be connected, and the torque of the rotor 32 can be controlled using the chopper circuit. The switch S1 can be omitted by using a gate block function for the rotor-side power transducer 35 and the stator-side power transducer 36. The load 41 may be a resistor, as shown in Fig. 13A, or a storage battery, as shown in Fig. 13B.

Upon braking the rotor, 32, the pitch control unit 20 calculates a pitch angle for relieving the wind blowing against the wind turbine blades 12 and outputs it as a shutdown pitch angle signal. Next, the control unit 21 determines a feathering speed and feathering timing and outputs a feathering signal. The wind turbine bladed 12 are driven at the timing based on the feathering signal to assume the pitch angle based own the shutdown pitch angle signal. That is, the wind turbine blades 12 are driven to a pitch angle for relieving the wind on the basis of a shutdown pitch individual signal at low speed so that no excessive load is imposed on the structures of the wind turbine generator, such as the tower, and maintains the pitch angle determined by the shutdown pitch angle signal for a period of time determined on the basis of the feathering signal.

Fig. 14 is a circuit diagram of a generator 30 according to a modification of this embodiment, in which a DC power supply 40 is connected to the rotor winding terminals u, v, and w. Thus, the generator 30 functions as a synchronous generator that uses the stator as a field magnet and the rotor as an armature and consumes the rotational energy of the rotor as electrical energy, thereby being braked.

Thus, with the wind turbine generator of the present invention, since rapid driving of pitch angle switching is not performed when the rotation of the wind turbine rotor is suddenly accelerated, no mechanical impact is exerted on the structures of the wind turbine generator, such as the tower. Furthermore, since the rotational speed of the rotor of the generator is reduced by applying regenerative braking to the generator together with feathering, the rotation of the wind turbine rotor can be sufficiently stopped even if the pitch-angle switching is driven at low speed. Furthermore, since the rotation of the wind turbine rotor can be reduced or stopped without adding another mechanism, such as a brake or a damping mechanism, it is desirable also from the viewpoint of manufacturing costs and maintenance. Furthermore, in particular, if a magnetic field power supply and a load separate from the utility grid are provided, a braking force can be applied even if the generator is disconnected from the utility grid due to a utility grid fault or the like.

### {Reference Signs List}

- 11: wind turbine rotor
- 12: wind turbine blades
- 13: nacelle
- 14: gearbox
- 15: generator
- 16: brake
- 18: main shaft
- 20: pitch-angle control unit
- 21: control unit
- 25: brake disc
- 26: caliper
- 30: winding induction generator
- 31: stator
- 32: rotor
- 35: rotor-side power transducer
- 36: stator-side power transducer
- 37: rectifier
- 38: chopper circuit
- 40: DC power supply
- 41: load

## Claims

1. A wind turbine generator comprising:
a wind turbine rotor including blades having a variable pitch angle;
a control unit for controlling driving speed and drive timing of the blades; and
a pitch-angle control unit for controlling a pitch angle by driving the blades own the basis of the control unit;
wherein when rotational speed of the wind turbine rotor become a predetermined permissible rotational speed or higher, the control unit controls the driving speed of the blades so as to change from high speed to low speed, stepwise or continuously.

2. A wind turbine generator according to Claim 1, further comprising
a braking unit for stopping rotation of the wind turbine rotor;
wherein when the rotational speed of the wind turbine rotor becomes a predetermined permissible rotational speed or higher, the driving speed of the blades is changed by the control unit from high speed to low speed, stepwise or continuously, and thereafter, the rotation of the wind turbine rotor is stopped by the braking unit.

3. A wind turbine generator according to Claim 1, wherein when the rotational speed of the wind turbine rotor becomes a predetermined permissible rotational speed or higher, the driving speed of the blades is changed by the control unit from high speed to low speed, stepwise or continuously, and thereafter, the rotation of the wind turbine rotor is stopped by applying reverse braking to a generator that rotates together with the wind turbine rotor and that is driven by the rotation of the wind turbine rotor.

4. A wind turbine generator according to Claim 1, wherein when the rotational speed of the wind turbine rotor becomes a predetermined permissible rotational speed or higher, the driving speed of the blades is changed from high speed to low speed, stepwise or continuously, by the control unit, and thereafter, rotation of the wind turbine rotor is stopped by applying regenerative braking to a generator that rotates together with the wind turbine rotor and that is driven by the rotation of the wind turbine rotor.

5. A method for controlling a wind turbine generator comprising a wind turbine rotor including blades having a variable pitch angle; a control unit for controlling driving speed and driving timing of the blades; and a pitch-angle control unit for controlling a pitch angle by driving the blades on the basis of the control unit, the method comprising:
a step of detecting whether rotational speed of the wind turbine rotor has become a predetermined permissible rotational speed or higher; and
a step of controlling the driving speed of the blades by the control unit so as to change from high speed to low speed, stepwise or continuously, in response to the detection result.

6. A method for controlling a wind turbine generator according to Claim 5, wherein a braking unit for stopping rotation of the wind turbine rotor is further provided; the method comprising:
the step of detecting whether the rotational speed of the wind turbine rotor has become a predetermined permissible rotational speed or higher;
the step of changing the driving speed of the blades from high speed to low speed, stepwise or continuously, by the control unit in response to the detection result; and
a step of stopping the rotation of the wind turbine rotor by the braking unit.

7. A method for controlling a wind turbine generator according to Claim 5, comprising:
the step of detecting whether the rotational speed of the wind turbine rotor has become a predetermined permissible rotational speed or higher;
the step of changing the driving speed of the blades from high speed to low speed, stepwise or continuously, by the control unit in response to the detection result; and
a step of stopping rotation of the wind turbine rotor by applying reverse braking to a generator that rotates together with the wind turbine rotor and that is driven by the rotation of the wind turbine rotor.

8. A for controlling a wind turbine generator according to claim 5, comprising:
the step of detecting whether the rotational speed of the wind turbine rotor has become a predetermined permissible rotational speed or higher;
the step of changing the driving speed of the blades from high speed to low speed, stepwise or continuously, by the control unit in response to the detection result; and
a step of stopping rotation of the wind turbine rotor by applying regenerative braking to a generator that rotates together with the wind turbine rotor and that is driven by the rotation of the rotor.
